# EUROPEAN PATENT APPLICATION

(11) **EP 3 605 423 A1**
(43) Date of publication of application: **05.02.2020**
(21) Application number: 18777637.2
(22) Date of filing: 31.01.2018
(51) Int. Cl.: G06Q 20/10, G06F 17/40, G06Q 20/34, G06Q 20/32

(54) **INFORMATION PROCESSING DEVICE, INFORMATION PROCESSING METHOD, AND PROGRAM**

(30) Priority: 31.03.2017 JP 2017071125
(71) Applicant: Sony Corporation, Tokyo 108-0075 (JP)
(72) Inventor: KURATA, Masatomo, Tokyo 108-0075 (JP); MATSUZAWA, Sota, Tokyo 108-0075 (JP)
(74) Representative: MFG Patentanwälte Meyer-Wildhagen Meggle-Freund Gerhard PartG mbB
(86) International application number: PCT/JP2018/003171
(87) International publication number: WO 2018/179805

(57) **Abstract**

Provided is an information processing device, an information processing method, and a program which are capable of controlling remittance of an amount of money set according to a user context.

An information processing device includes a determination unit configured to determine whether a user context matches a remittance condition previously registered or not, on the basis of context information regarding a user wearing a device having a payment function, and a control unit configured to perform, when the user context is determined to match the remittance condition, control for remittance of a predetermined amount of money to a predetermined destination.

## Description

### TECHNICAL FIELD

The present disclosure relates to an information processing device, an information processing method, and a program.

### BACKGROUND ART

In general, groups, such as families, often share money among members. The members who share money, for example, withdraw money from their joint account with their money cards or use their credit cards to pay money from their joint account.

### CITATION LIST

### PATENT DOCUMENT

Patent Document 1: Japanese Patent Application Laid-Open No. 2016-111704

### SUMMARY OF THE INVENTION

### PROBLEMS TO BE SOLVED BY THE INVENTION

However, it is troublesome and takes time to manage money shared among a group, specifically, to monitor payment made by each of the members who share money. In particular, it is difficult to monitor and manage the use of pocket money given to a child by his/her parent.

Here, as a technique for performing specific control according to the situation, for example, in the above-mentioned Patent Document 1, a system is disclosed to perform unlocking control on the basis of vibration, sound, or the like satisfying a predetermined condition when an unlocking request from a near first communication terminal is detected, but control for management of money according to the situation is not mentioned in particular.

Thus, the present disclosure proposes an information processing device, an information processing method, and a program which are capable of controlling remittance of an amount of money set according to a user context.

### SOLUTIONS TO PROBLEMS

According to the present disclosure, an information processing device is proposed which includes: a determination unit configured to determine whether a user context matches a remittance condition previously registered or not, on the basis of context information regarding a user wearing a device having a payment function; and a control unit configured to perform, when the user context is determined to match the remittance condition, control for remittance of a predetermined amount of money to a predetermined destination.

According to the present disclosure, an information processing method is proposed which, by a processor, includes: determining whether a user context matches a remittance condition previously registered or not, on the basis of context information regarding a user wearing a device having a payment function; and performing, when the user context is determined to match the remittance condition, control for remittance of a predetermined amount of money to a predetermined destination.

According to the present disclosure, a program is proposed which causes a computer to function as: a determination unit configured to determine whether a user context matches a remittance condition previously registered or not, on the basis of context information regarding a user wearing a device having a payment function; and a control unit configured to perform, when the user context is determined to match the remittance condition, control for remittance of a predetermined amount of money to a predetermined destination.

### EFFECTS OF THE INVENTION

As described above, according to the present disclosure, it is possible to control remittance of an amount of money set according to a user context.

Note that the effects are not necessarily limited to the above description, and the present disclosure may have any of the effects described herein or other effects conceivable from the present description with the above effects or instead of the above effects.

### BRIEF DESCRIPTION OF DRAWINGS

Fig. 1 is a diagram illustrating an overview of an information processing system according to an embodiment of the present disclosure.
Fig. 2 is a block diagram illustrating an example of the configuration of a wearable device according to the present embodiment.
Fig. 3 is a block diagram illustrating an example of the configuration of a service server according to the present embodiment.
Fig. 4 is a block diagram illustrating an example of the configuration of a bank server according to the present embodiment.
Fig. 5 is a sequence diagram illustrating a remittance process according to a user context, according to a first example of a first embodiment.
Fig. 6 is a diagram illustrating an example of a screen for setting a remittance amount according to the first example of the first embodiment.
Fig. 7 is a diagram illustrating an example of an electronic money balance display screen in a wearable device according to the first example of the first embodiment.
Fig. 8 is a sequence diagram illustrating a remittance process according to a user context, according to a second example of the first embodiment.
Fig. 9 is a diagram illustrating an example of a screen requiring case-by-case approval, according to the second example of the first embodiment.
Fig. 10 is a sequence diagram illustrating a remittance process according to a user context, according to a third example of the first embodiment.
Fig. 11 is a diagram illustrating an example of a screen requiring case-by-case approval according to the third example of the first embodiment.
Fig. 12 is a diagram illustrating an overview of a second embodiment.
Fig. 13 is a sequence diagram illustrating an operation process according to the second embodiment.
Fig. 14 is a diagram illustrating an example of a notification screen requiring remittance approval according to the second embodiment.
Fig. 15 is a sequence diagram illustrating another operation process according to the second embodiment.
Fig. 16 is a sequence diagram illustrating an operation process of remittance management in a case where a high-level context is used as a remittance condition, according to an embodiment of the present disclosure.

### MODE FOR CARRYING OUT THE INVENTION

Hereinafter, preferred embodiments of the present disclosure will be described in detail with reference to the accompanying drawings. Note that in the present description and the drawings, components having substantially the same functional configurations will be denoted by the same reference numerals and redundant description will be omitted.

Furthermore, the description will be given in the following order.
1. Overview of information processing system according to embodiment of present disclosure
2. Configuration
2-1. Configuration of wearable device 1
2-2. Configuration of service server 2
2-3. Configuration of bank server 3
3. Embodiments
3-1. First Embodiment
   (3-1-1) First Example
   (3-1-2) Second Example
   (3-1-3) Third Example
   (3-1-4) Supplementary note
3-2. Second Embodiment
3-3. Others
   (3-3-1) Recognition of high-level context
   (3-3-2) Remittance between accounts
4. Conclusion

### <<1. Overview of information processing system according to embodiment of present disclosure>>

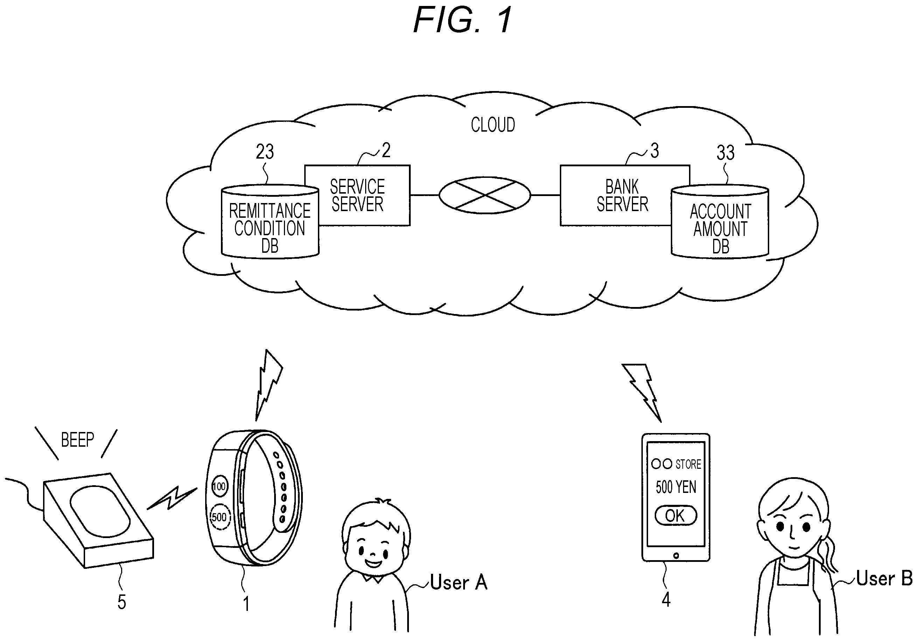

Fig. 1 is a diagram illustrating an overview of an information processing system according to an embodiment of the present disclosure. As illustrated in Fig. 1, the information processing system according to the present embodiment includes a wearable device 1 used by a user A (e.g., a child), a communication terminal 4 used by a user B (for example a parent), and a service server 2 for transmitting/receiving data to/from the wearable device 1 and the communication terminal 4.

The wearable device 1 has an electronic money payment function. Specifically, for example, in a case where the wearable device 1 includes a wristband device, when the user A taps the wearable device 1 worn on his/her arm on a reader 5 at a store, near field wireless communication is performed between the wearable device 1 and the reader 5, and payment is made.

The communication terminal 4 is includes, for example, a smartphone, a tablet terminal, a mobile phone terminal, or a personal computer (PC).

Here, as described above, it is troublesome and takes time to manage money shared among a group, specifically, to monitor payment made by each of the members who share money. In particular, it is difficult to monitor and manage the use of pocket money given to a child by his/her parent.

Therefore, in the present embodiment, a remittance of money to the wearable device 1 having a payment function is made or controlled depending on a user context, such as an action or a situation, and appropriate remittance to another person (member who shares money) is made easily without any load.

Specifically, for example, a parent (the user B) previously sets, on the communication terminal 4, a remittance (recharge) condition and a remittance amount from a joint account of the family to the wearable device 1 having a payment function, which is worn by a child (the user A), and registers the remittance condition and a remittance condition DB 23 in the service server 2.

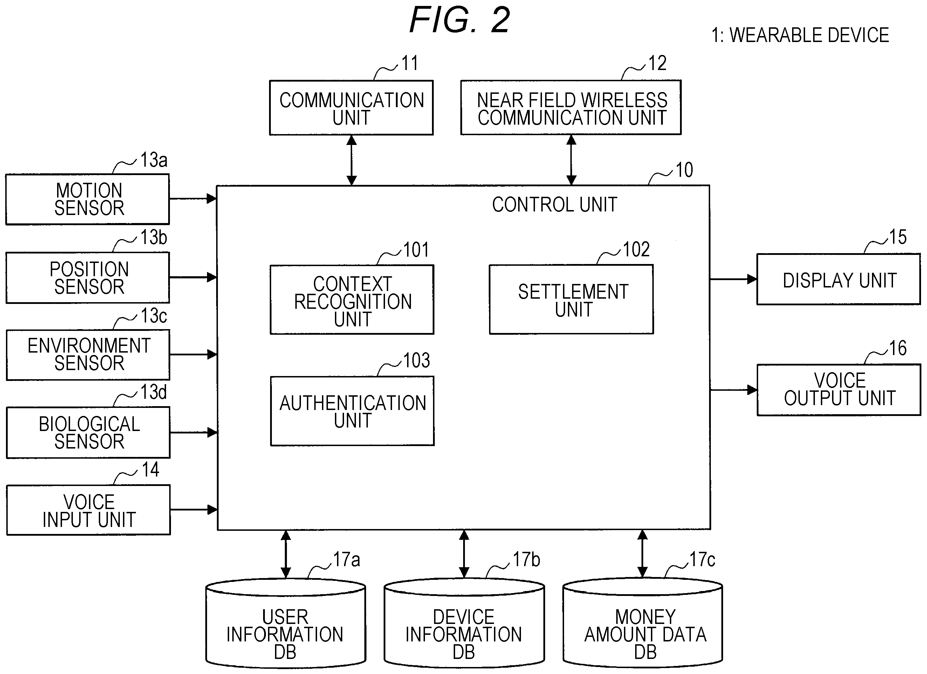

The wearable device 1 is, for example, a wristband device and includes a motion sensor 13a, such as an acceleration sensor or a gyro sensor, a position sensor 13b, and the like (see Fig. 2) to recognize, on a daily basis, the action or situation (so-called user context) of a wearer (here, the user A; the child) and transmit a recognition result to the service server 2. Furthermore, the wearable device 1 has an electronic money payment function.

The service server 2 determines, depending on a context transmitted from the wearable device 1, whether the remittance condition registered in the remittance condition DB 23 is satisfied or not and instructs a bank server 3 to remit a predetermined amount of money to the wearable device 1 from a predetermined joint account. For example, in a case where the parent previously sets a condition where remittance of 500 yen is to be made when the child buys something at a store A, the service server 2, which have recognized that the child is in the store A and will make payment at the store A on the basis of a context transmitted from the wearable device 1, determines that the condition is satisfied and instructs the bank server 3 to remit 500 yen to the wearable device 1 from the joint account of the parent.

According to the instruction, the bank server 3 performs processing to remit 500 yen to the wearable device 1 from the joint account of the parent. Specifically, a withdrawal is made and remittance information is transmitted to the wearable device 1.

The wearable device 1 having received the remittance information (electronic money recharge information), updates amount data (balance information) stored in the device. Thus, the user A can tap the recharged wearable device 1 on the reader 5 of a POS terminal in the store to pay electronic money.

As described above, in the information processing system according to the present embodiment, remittance of money from a joint account to a member who shares money is made according to a user context of the member who shares money, thereby enabling easier management of money shared in a group without any load.

Furthermore, in the present embodiment, it is assumed that the parent manages money by giving the child the wearable device 1 having a payment function and the parent uses the communication terminal 4 to remotely recharge with a predetermined amount of money according to the place, the situation, or the like of the child (getting on a train, bus, etc.).

The information processing system according to an embodiment of the present disclosure has been described above. Subsequently, specific configurations of respective devices included in the information processing system according to the present embodiment will be described with reference to the drawings.

### <<2. Configuration>>

### <2-1. Configuration of wearable device 1>

Fig. 2 is a block diagram illustrating an example of the configuration of a wearable device 1 according to the present embodiment. As illustrated in Fig. 2, the wearable device 1 includes a control unit 10, a communication unit 11, a near field wireless communication unit 12, a motion sensor 13a, a position sensor 13b, an environment sensor 13c, a biological sensor 13d, a voice input unit 14, and a display unit 15., a voice output unit 16, a user information database (DB) 17a, a device information DB 17b, and a money amount data DB 17c.

### (Control unit 10)

The control unit 10 functions as an arithmetic processing device and control device and controls the overall operation in the wearable device 1, according to various programs. The control unit 10 is achieved by, for example, an electronic circuit, such as a central processing unit (CPU) or a microprocessor. In addition, the control unit 10 may include read only memory (ROM) for storing programs, operation parameters, and the like to be used, and random access memory (RAM) for temporarily storing parameters and the like that changing appropriately.

The control unit 10 according to the present embodiment also functions as a context recognition unit 101, a settlement unit 102, and an authentication unit 103.

The context recognition unit 101 recognizes a user context according to information (action, place, environment, biological information) based on the various sensors 13 or voice information (environmental sound, speech, etc.) input from the voice input unit 14. The recognized context is transmitted by the communication unit 11 to a service server 2 positioned on a cloud network.

The settlement unit 102 transmits/receives data to/from a reader 5 via the near field wireless communication unit 12, for payment. Specifically, the settlement unit 102 transmits balance data stored in the money amount data DB 17c to the reader 5 by the near field wireless communication unit 12 and, on the basis of settlement information received from the reader 5 (payment amount and new balance data), updates the money amount data DB 17c. Note that the settlement unit 102 may permit payment in a state in which user authentication is performed by the authentication unit 103 (authentication state) and refuse payment in a state in which the user authentication is not performed (non-authentication state). Thereby, the security of the wearable device 1 can be ensured. Furthermore, the settlement unit 102 may correspond to host-based card emulation (HCE).

The authentication unit 103 authenticates a person wearing the wearable device 1 on the basis of biological information detected by the biological sensor 13d. For example, the authentication unit 103 acquires fingerprint information regarding the user by the biological sensor 13d, performs pattern matching by using fingerprint information regarding the user registered in advance, and the similarity calculated on the basis of the pattern matching is higher than a predetermined value, it is determined that the fingerprint authentication is successfully performed. Fingerprint authentication is appropriately performed and is not limited to the pattern matching described above, and, for example, fingerprint authentication processing using a feature point extraction method or a frequency analysis method may be employed.

Furthermore, the authentication unit 103 can also perform authentication determination by using vein authentication, voice print authentication, gait authentication, face authentication, iris authentication, or the like in addition to fingerprint authentication. The face authentication and the iris authentication can be performed on the basis of a captured image captured by a camera (not illustrated) provided in the wearable device 1.

Furthermore, the authentication is performed at appropriate timing, and, for example, fingerprint authentication may be performed in a case where it is detected that the wearable device 1 is mounted to a user is detected by using a proximity sensor (not illustrated). The proximity sensor is a sensor acquiring a separation distance between the user and the wearable device 1 and includes, for example, an inductive sensor, a capacitive sensor, an ultrasonic sensor, or an infrared sensor.

For example, when the wearable device 1 is mounted to the user and the authentication unit 103 authenticates the user, the control unit 10 changes the authentication state of the wearable device 1 to "a state in which user authentication has been performed", and the payment function by the settlement unit 102 is made available. In contrast, in a case where fingerprint authentication fails or in a case where the wearable device 1 is removed from the user, the control unit 10 changes the authentication state of the wearable device 1 to "a state in which user authentication is not yet performed", and the payment function is made unavailable.

Furthermore, in addition to the biometric authentication, the control unit 10 may be configured to predict a daily behavior pattern of the user on the basis of history information of the motion sensor 13a, the position sensor 13b, the environment sensor 13c, or the like and determine a behavior pattern having a low similarity to the daily behavior pattern as an extraordinary behavior pattern (abnormal situation), making the payment function unavailable.

### (Communication unit 11)

The communication unit 11 transmits/receives data to/from a service server 2 or a bank server 3 in a cloud (network) by wireless communication. The communication unit 11 uses, for example, a wireless local area network (LAN), Wi-Fi (registered trademark), a mobile communication network (long term evolution ((LTE), 3G (third generation mobile telecommunication system)), or the like to transmit/receive data.

### (Near field wireless communication unit 12)

The near field wireless communication unit 12 performs communication within a short range from about several centimeters to 10 cm. For example, the near field wireless communication unit 12 can transmit/receive data for payment, via non-contact communication, to/from a POS terminal in a store, a vending machine, or a reader 5 for electronic money payment installed at a station, a door of a public transport vehicle, such as a bus, or the like. In addition, transmission/reception of data for payment is not limited to the non-contact communication and may be performed by using magnetic reading or bar-code reading. In a case of the bar-code reading, in a case where the service server 2 determines that a user context satisfies a remittance condition, a one-time bar code for payment is generated and transmitted, and the one-time bar code is displayed on the display unit 15 of the wearable device 1. Payment from an account is made by reading the one-time bar code by the reader 5.

### (Various sensors 13)

The wearable device 1 includes the motion sensor 13a, the position sensor 13b, the environment sensor 13c, and the biological sensor 13d. The motion sensor 13a includes, for example, an acceleration sensor, a gyroscope, and a magnetic field sensor to detect a motion or an orientation of the user and output a detection result to the context recognition unit 101.

The position sensor 13b acquires position information of the wearable device 1 and outputs the position information to the context recognition unit 101. For example, the position sensor 13b is achieved by a global positioning system (GPS) unit, receives a radio wave from a GPS satellite, detects a position where the wearable device 1 is located, and outputs information regarding the detected position to the context recognition unit 101. Furthermore, the position sensor 13b may perform communication, for example, via Wi-Fi (registered trademark) or Bluetooth (registered trademark) or with a mobile phone, a PHS, a smart phone, or the like, in addition to GPS or detect the position via short distance communication or the like.

The environment sensor 13c is a sensor for detecting surrounding environment and may include, for example, a temperature sensor, an atmospheric pressure sensor, a rain sensor, a wind sensor, an illuminance sensor, or the like. In addition, environmental sound may be detected by a microphone.

The biological sensor 13d is a sensor for detecting biological information regarding the user and may include, for example, a fingerprint sensor, a vein sensor, a heart rate sensor, a pulse sensor, a body temperature sensor, a blood glucose sensor, a sweat sensor, or the like.

### (Voice input unit 14)

The voice input unit 14 includes a microphone, a microphone amplifier unit for amplifying and processing an audio signal obtained from the microphone, and an A/D converter for digital conversion to an audio signal and outputs the audio signal to the control unit 10.

### (Display unit 15)

The display unit 15 is a display device for outputting an operation screen, a menu screen, and the like. The display unit 15 may include, for example, a display device, such as a liquid crystal display (LCD) or an organic electroluminescence (EL) display. Furthermore, the display unit 15 is configured to display the balance, payment amount, or the like of electronic money recharged in the wearable device 1, as a text or an image.

### (Voice output unit 16)

The voice output unit 16 includes a speaker for reproducing an audio signal and an amplifier circuit for the speaker.

### (Various DBs 17)

The wearable device 1 includes the user information DB 7a, the device information DB 17b, and the money amount data DB 17c. The user information DB 7a stores information relating to a user. For example, data for user authentication (fingerprint information, vein information, voice print information, gait information, face image, iris image, etc.) is registered in the user information DB 7a. In addition, a user's action history (a history based on information detected by the motion sensor 13a, the position sensor 13b, the environment sensor 13c, and the biological sensor 13d) may be accumulated.

The device information DB 17b stores information relating to the wearable device 1. For example, an individual ID of the wearable device 1 is stored in the device information DB 17b.

The money amount data DB 17c stores balance information (recharge amount) of electronic money. Furthermore, the money amount data DB 17c may further store a payment history (deposit and withdrawal information).

Furthermore, the various DBs 17 each include a storage medium, a recording device for recording data in the storage medium, a reading device for reading data from the storage medium, a deletion device for deleting data recorded in the storage medium, and the like.

The configuration of the wearable device 1 according to the present embodiment has been described above in detail. Note that the configuration of the wearable device 1 according to the present embodiment is not limited to the example illustrated in Fig. 2 and, for example, may further include a camera or may not include the voice input unit 14 and the voice output unit 16.

### <2-2. Configuration of service server 2>

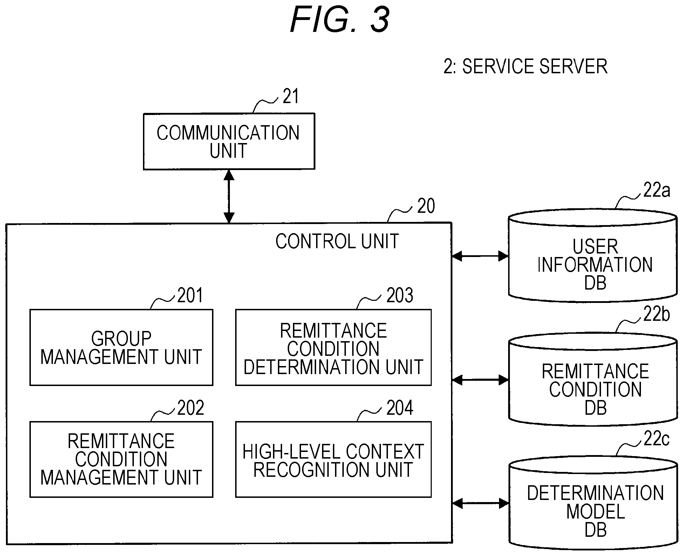

Fig. 3 is a block diagram illustrating an example of the configuration of the service server 2 according to the present embodiment. As illustrated in Fig. 3, the service server 2 includes a control unit 20, a communication unit 21, a user information DB 22a, a remittance condition DB 22b, and a determination model DB 22c.

### (Control unit 20)

The control unit 20 functions as an arithmetic processing device and control device and controls the overall operation in the service server 2, according to various programs. The control unit 20 is achieved by, for example, an electronic circuit, such as a central processing unit (CPU) or a microprocessor. In addition, the control unit 20 may include read only memory (ROM) for storing programs, operation parameters, and the like to be used, and random access memory (RAM) for temporarily storing parameters and the like that changing appropriately.

The control unit 20 according to the present embodiment also functions as a group management unit 201, a remittance condition management unit 202, a remittance condition determination unit 203, and a high-level context recognition unit 204.

The group management unit 201 manages registration, update, deletion, and the like of group information. The group information may be registered in the user information DB 22a. Furthermore, the group information includes IDs of users (members who share money) constituting a community group, an ID of the group (family), the roles of the users (approver, non-approver, etc.), an individual ID of a communication terminal 4 or a wearable device 1 of each user, and information about a joint account. Note that, in the present embodiment, an example of payment from the joint account will be described, but in a case of replacement with payment on a credit card withdrawing money from the joint account, the group information can also include credit card information.

The remittance condition management unit 202 manages registration, update, deletion, and the like of a predetermined remittance condition for remittance of money to the wearable device 1. The remittance condition may be registered in the remittance condition DB 22b. The remittance condition may include a group ID, a beneficiary (user ID or device ID), a user context, a remittance amount, the presence/absence of case-by-case approval, and the like. In a case where the absence of case-by-case approval is set, user's preliminary approval for payment set upon setting the remittance condition eliminates the process of user's approval required when a target person satisfies the remittance condition, making automatic remittance of money. On the other hand, in a case where the presence of case-by-case approval is set, the user is notified that the remittance condition is satisfied by the target person, and money is remitted after the process of user's approval.

On the basis of a result of recognition of a user context transmitted from the wearable device 1, the remittance condition determination unit 203 determines whether the remittance condition is satisfied or not. In a case where it is determined by the remittance condition determination unit 203 that the remittance condition is satisfied, the control unit 20 instructs the bank server 3 to remit a predetermined remittance amount from a predetermined joint account to a predetermined beneficiary. Note that the recognition of the user context may be performed on the side of the service server 2. Furthermore, the beneficiary may include the wearable device 1 or another account.

The high-level context recognition unit 204 recognizes a more specific action content (high-level context), on the basis of a behavior pattern history, schedule information, indoor location detection (detection of a room ID by Wi-Fi or beacon), or the like. In the result of recognition of a user context described above, the action or state of a user for a relatively short time, such as a current position or an action (running, walking, standing, getting on a train, or the like) recognized by the motion sensor is mainly recognized, but the high-level context recognition unit 204 recognizes a more specific action content, for example, "on the way to home from a cram school", "on the way to and from school", "on the way to a soccer club", "helping with washing dishes in kitchen", or "on the way to a camp as a club activity". The process of recognizing the high-level context is not particularly limited, but, for example, Japanese Patent No. 5440080 is referred to. Specifically, on the basis of position information (further, an attribute "geo category" of a current position based on the position information may be detected from acquired map information), a context recognition result, the behavior pattern history, the schedule information, or a content of the indoor location detection, the high-level context recognition unit 204 determines a specific action content with reference to a predetermined determination model registered in the determination model DB 22c.

### (Communication unit 21)

The communication unit 21 is connected to a network in a wired or wireless manner to transmit/receive data to/from the bank server 3, the communication terminal 4, and the wearable device 1 via the network. The communication unit 21 is communicably connected to the network by, for example, via a wired/wireless local area network (LAN), wireless fidelity (Wi-Fi, registered trademark), or the like.

### (Various DBs 22)

The service server 2 includes the user information DB 22a, the remittance condition DB 22b, and the determination model DB 22c.

As described above, the user information DB 22a stores group information including an ID of the group, IDs of the users constituting the group, the roles of the users, and an individual ID of a terminal of each user.

As described above, the remittance condition DB 22b stores remittance conditions including a beneficiary, a group ID, a user context, a remittance amount, and the presence/absence of setting of case-by-case approval.

The determination model DB 22c stores various determination models used for high-level context recognition. The determination models each may be a determination rule set in advance or a determination model generated using a machine learning algorithm.

Furthermore, the various DBs 22 each include a storage medium, a recording device for recording data in the storage medium, a reading device for reading data from the storage medium, a deletion device for deleting data recorded in the storage medium, and the like.

The configuration of the service server 2 according to the present embodiment has been specifically described above. Note that the configuration of the service server 2 according to the present embodiment is not limited to the example illustrated in Fig. 3, may be provided, for example, in an external device to which functions or DBs are at least partially connected communicatively, or may have at least one of the functions of the context recognition unit 101, the settlement unit 102, and the authentication unit 103 of the wearable device 1 described above with reference to Fig. 2. Thus, context recognition, payment, or authentication can be performed on the server side as well.

### <2-3. Configuration of bank server 3>

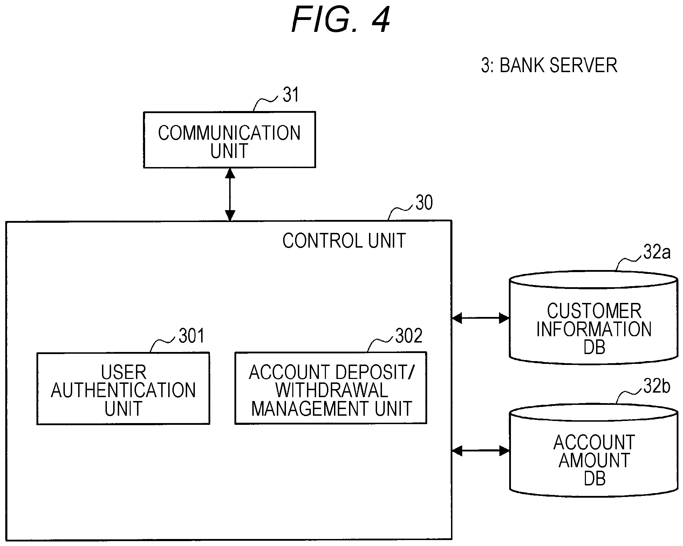

Fig. 4 is a block diagram illustrating an example of the configuration of the bank server 3 according to the present embodiment. As illustrated in Fig. 4, the bank server 3 includes a control unit 30, a communication unit 31, a customer information DB 32a, and an account amount DB 32b.

### (Control unit 30)

The control unit 30 functions as an arithmetic processing device and control device and controls the overall operation in the bank server 3, according to various programs. The control unit 30 is achieved by, for example, an electronic circuit, such as a central processing unit (CPU) or a microprocessor. In addition, the control unit 30 may include read only memory (ROM) for storing programs, operation parameters, and the like to be used, and random access memory (RAM) for temporarily storing parameters and the like that changing appropriately.

Furthermore, the control unit 30 according to the present embodiment also functions as a user authentication unit 301 and an account deposit/withdrawal management unit 302.

The user authentication unit 301 performs user authentication. For example, the user authentication unit 301 compares an input account number and personal identification number with an account number and a personal identification number of a customer registered in the customer information DB 32a and, in a case where the account numbers and personal identification numbers match each other, determines that the authentication is successfully performed.

The account deposit/withdrawal management unit 302 performs deposit to an account and withdrawal from the account.

### (Communication unit 31)

The communication unit 31 is connected to a network in a wired or wireless manner to transmit/receive data to/from the service server 2, the communication terminal 4, and the wearable device 1 via the network. The communication unit 31 is communicably connected to the network by, for example, via a wired/wireless local area network (LAN), wireless fidelity (Wi-Fi, registered trademark), or the like.

### (Various DBs 32)

The bank server 3 includes the customer information DB 32a and the account amount DB 32b. The customer information DB 32a stores customer information (account number, personal identification number, biometric information, customer name, address, etc.). The account amount DB 32b stores money amount information of each account.

Furthermore, the various DBs 32 each include a storage medium, a recording device for recording data in the storage medium, a reading device for reading data from the storage medium, a deletion device for deleting data recorded in the storage medium, and the like.

The configuration of the bank server 3 according to the present embodiment has been specifically described above. Note that the configuration of the bank server 3 according to the present embodiment is not limited to the example illustrated in Fig. 4.

### <<3. Embodiments>>

Next, the information processing system according to the present embodiment will be specifically described using a plurality of embodiments.

### <3-1. First Embodiment>

Firstly, a first embodiment of remittance management in a community, such as a family, will be specifically described using a plurality of examples. Here, it is assumed that, for example, a wearable device having a function of payment by electronic money is provided for a family, and a parent and a child each wear the wearable device 1 on his/her arm to lead a daily life.

### (3-1-1. First Example)

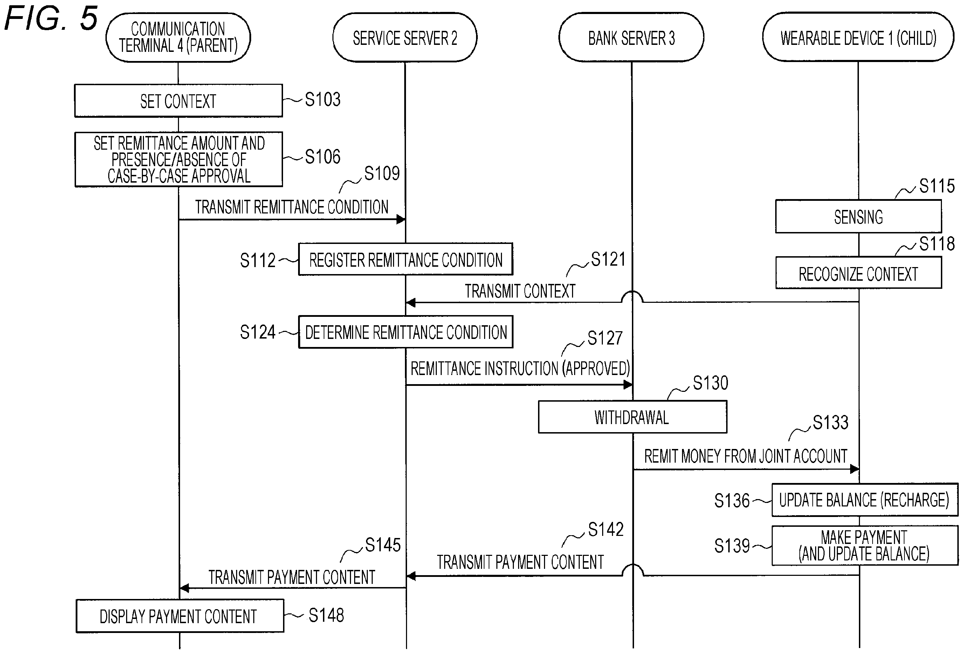

Fig. 5 is a sequence diagram illustrating a remittance process according to a user context, according to a first example of the first embodiment. In the present example, it is described that a parent sets a remittance condition for remitting money to the wearable device 1 of a child via a communication terminal 4 (absence of case-by-case approval), and in a case where a children's action (context) matches the remittance condition, a predetermined amount of money is remitted.

Specifically, as illustrated in Fig. 5, firstly, in the communication terminal 4, a context as a remittance condition is set by the parent who is the user thereof (step S103). The context to be set indicates, for example, whether or not to make a remittance in what situation, and, for example, a user's action or situation of the user is set as a condition. For example, a condition indicating "place", for example, the child who is a beneficiary is in the vicinity of point A (e.g., within a radius of 100 m) or the child is in a predetermined shopping street, may be set as the condition. Since the parent grasps the range of activities of the child and knows what the child desires to buy, and owing to this configuration, the parent can give pocket money to the child who is at an specific familiar place, such as a stationary shop, a store, or near the home. In addition, it is also possible to set a store to which the parent has requested the children to buy something. For example, the parent can set the range of a place from a map screen displayed on the communication terminal 4, input the address of the place, or search for the place by name.

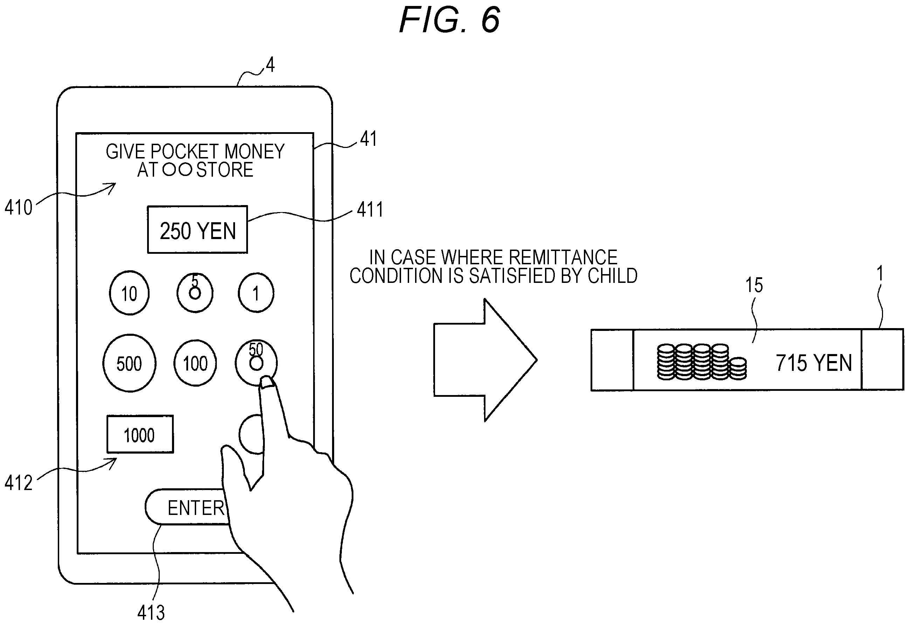

Next, a remittance amount and the presence/absence of the case-by-case approval are set (step S106). Here, an example of a screen for setting a remittance amount is illustrated in Fig. 6.

As illustrated on the left side of Fig. 6, the communication terminal 4 of the parent includes a display unit 41 which displays a context 410, for example, "give pocket money at ○○ store", a remittance amount field 411, currency icons 412, and an enter button 413. For Inputting a remittance amount, text-based input may be employed or intuitive deposit by using the currency icons 412 as illustrated in Fig. 6 may be employed. Inputting of the context and the remittance amount in this way enables remittance to the wearable device 1 of the child, as illustrated on the right side of Fig. 6, in a case where the remittance condition is satisfied by the child who is the beneficiary. The display unit 15 of the wearable device 1 displays the balance of electronic money (or the amount of money remitted from the parent may be displayed first, then displaying the balance to which the remittance amount is added).

In addition, "the presence/absence of case-by-case approval" represents the setting of whether or not to confirm parent's approval for remittance of money (i.e., approval for withdrawal of money from a joint account) every time remittance is made each time the remittance condition is actually satisfied by the child. In a case where "the presence of case-by-case approval" is set, inquiry notification about remittance approval is sent from a service server 2 to a communication terminal 4 when the child satisfies the remittance condition, and money is transmitted when approval is granted by the parent. On the other hand, in a case where "the absence of case-by-case approval" is set, it is considered the parent has granted approval upon setting the remittance condition, and when the child satisfies the remittance condition, money is remitted without making an inquiry about remittance approval.

Note that the remittance amount may not be set in advance, and the amount of money may be set in the communication terminal 4 when the inquiry notification about remittance approval is received. At this time, in addition to the satisfaction of the context by the child, the inquiry notification about approval for remittance of money may include a merchandise product for which the child is going to make payment or the price of the merchandise product, and the parent can determine and grant approval for the remittance amount after confirming the content of payment. It is also possible to set the total remittance amount or the number of remittances of a predetermined amount of money.

Next, the communication terminal 4 transmits, as the remittance conditions, an context which is input, a remittance amount, and the presence/absence of case-by-case approval to the service server 2 (step S109), and a remittance condition management unit 202 of the service server 2 registers the remittance conditions in a remittance condition DB 22b in association with an ID or the like of the parent or a group (step S112). In addition, the remittance condition management unit 202 may extract an individual ID of the wearable device 1 of a beneficiary (child) from group information stored in a user information DB 22a so that the individual ID is registered in the remittance condition DB 22b in association with the ID or the like of the parent or group.

Next, the wearable device 1 mounted to the child senses the action and the state of the child who is the user by using the various sensors 13 (step S115) and recognizes the context of the user on the basis of the sensing data (step S118).

Next, the wearable device 1 transmits the recognized context to the service server 2 (step S121). Such sensing the action of the user, recognition of the context, and transmission to the service server 2 may be continuously performed when the wearable device 1 is mounted on the user. Alternatively, the wearable device 1 may transmit a context as a remittance request to the service server 2 when a child tries to make payment by using the wearable device 1 (e.g., when tapping the wearable device 1 on a reader 5 of a store). Alternatively, when the child makes a voice input "give me pocket money" from the voice input unit 14 of the wearable device 1, the context and the content of the voice (audio data or text data converted by voice recognition) may be transmitted as a remittance request to the service server 2.

Then, the remittance condition determination unit 203 of the service server 2 determines whether the context transmitted from the wearable device 1 matches the context registered as the remittance condition or not (step S124). For example, in a case where "a store within a radius of 100m from the point A" is set as the remittance condition, where the context of the child recognized is "the child is in a store within a radius of 20m from the point A", the remittance condition determination unit 203 determines that the remittance condition is satisfied.

Next, in a case where the context of the child satisfies the remittance condition and the absence of case-by-case approval is set, the service server 2 instructs a bank server 3 to remit a set predetermined remittance amount to the wearable device 1 of the child (step S127). The bank server 3 manages the joint account of the parent in which the remittance condition is set, and in the present embodiment, a predetermined amount of money is remitted (recharged) from the joint account to the wearable device 1 of the child. The parent who is the setter and the joint account of the parent (specifically, an account number and a holder) have been associated with each other previously, and, for example, the association is registered to be included in the group information stored in the user information DB 22a. The service server 2 transmits, to the bank server 3, a remittance instruction for giving an instruction to remit a predetermined amount of money from a predetermined joint account to a predetermined beneficiary. In addition, in a case where the presence of case-by-case approval is set, an inquiry about remittance approval is made from the service server 2 to the communication terminal 4 of the parent. In a case where the parent's approval is obtained, the service server 2 gives the remittance instruction to the bank server 3.

Next, in response to the remittance instruction from the service server 2, the bank server 3 withdraws a predetermined amount of money from the joint account of the parent (step S130) and remits money (electronic money recharging process) to the wearable device 1 via a network (step S133).

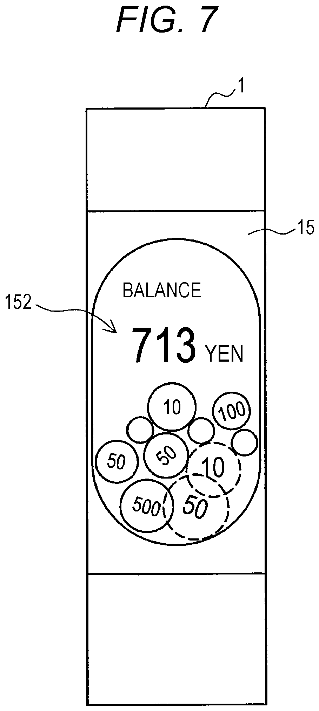

Next, the wearable device 1 updates the balance of electronic money held in the device in response to the remittance from the bank server 3 (step S136), makes payment via near field wireless communication with the reader 5, such as a POS terminal, and updates the balance again (step S139). Here, Fig. 7 shows an example of an electronic money balance display screen in the wearable device 1. As illustrated in Fig. 7, in the wearable device 1 according to the present embodiment, the display unit 15 may display the balance of electronic money in the form of numeral value or an image of coins corresponding to the amount of money. In addition, the wearable device 1 which pays electronic money displays an animation in which the paid coins disappear, causes the wearable device 1 itself to vibrate (by using a vibration unit not illustrated), or outputs a payment sound, causing the user to intuitively feel that the payment has been made.

Next, the wearable device 1 transmits the content of payment to the service server 2 (step S142). The content of payment includes at least information about the amount of money paid and also includes information relating to a merchandise product purchased if possible.

Then, the service server 2 transmits the content of payment to the parent communication terminal 4 (step S145), and the content of payment is displayed on the communication terminal 4 (step S148). This configuration allows the parent to see how much money the child actually use and what the child bought.

As described above, in the present example, in a case where an action and state of the child match the preset remittance condition, it is possible to remotely recharge (remit money) the wearable device 1 of the child.

### (3-1-2. Second Example)

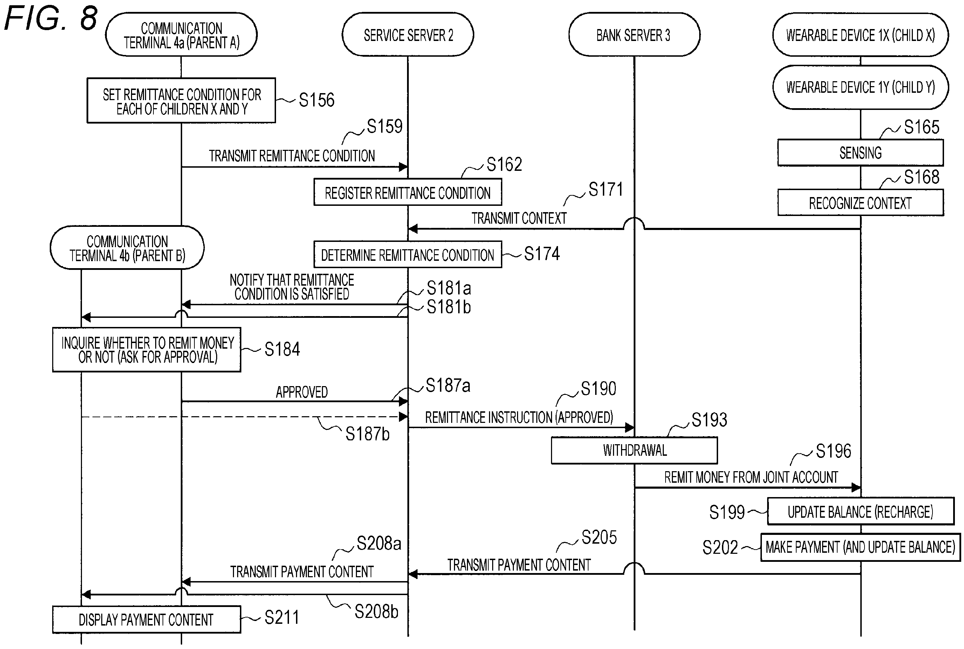

Next, a second example will be described with reference to Fig. 8. In the second example, it is described that, in a case where there are a plurality of children (e.g., child X, child Y), it is possible to set a remittance condition for each of the children (i.e., for each beneficiary), and further there may be a plurality of approvers (e.g., parent A, parent B). In the second embodiment, a context to be set as the remittance condition uses "action" as another example of the "place" described in the first example.

Fig. 8 is a sequence diagram illustrating a remittance process according to a user context, according to a second example of the first embodiment. As illustrated in Fig. 8, firstly, for example, in a communication terminal 4a, a remittance condition (context, remittance amount, and presence/absence of case-by-case approval) for each of the child X and the child Y is set by the parent A (step S156), and the remittance condition Is transmitted to a service server 2 (step S159). The context to be set may include a context relating to "action", for example, "drink fee will be given after 2-km running" for the child X" and "bus fare will be given upon getting on a bus" for the child Y. The parent A can select a children and sets the remittance condition for each children. Furthermore, in the present embodiment, "the presence of case-by-case approval" is set, and the approver may be any of the parents (parent A, parent B).

Next, a remittance condition management unit 202 of the service server 2 registers the received remittance condition in a remittance condition DB 22b (step S162).

Next, a wearable device 1X worn by the child X and a wearable device 1Y worn by the child Y each include various sensors 13 to sense the action and the state of each child who is the user (step S165), and the context is recognized on the basis of the sensing data (step S168) .

Next, the wearable device 1X or the wearable device 1Y transmits the recognized context to the service server 2 (step S171), and a remittance condition determination unit 203 of the service server 2 determines whether the context of the child matches the context registered as the remittance condition or not (step S174).

Next, in a case where the context of the child satisfies the remittance condition and "the presence of case-by-case approval" is set, the service server 2 makes an inquiry about remittance approval to the communication terminal 4a of the parent A and a communication terminal 4b of the parent B (steps S181a and S181b).

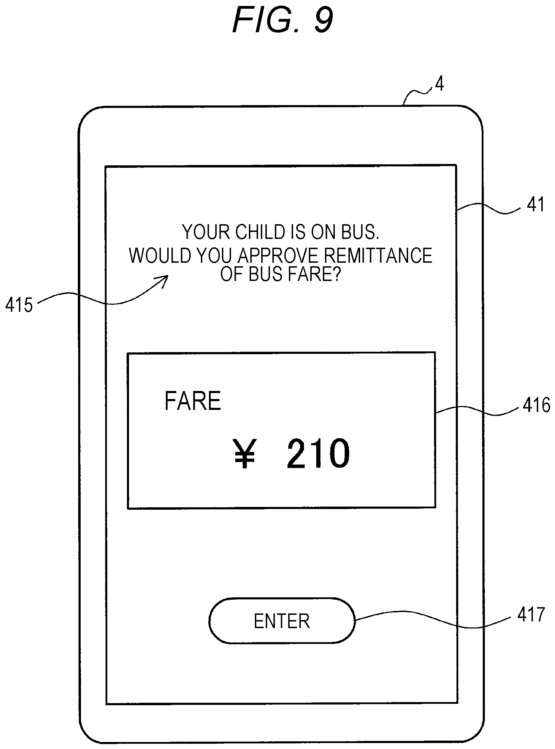

Next, the communication terminal 4a and the communication terminal 4b each display an inquiry screen for making an inquiry about remittance, obtaining the parents' approval for remittance (step S184). Here, an example of a screen requiring case-by-case approval is illustrated in Fig. 9. As illustrated in Fig. 9, a communication terminal 4 includes a display unit 41 which displays a text display 415, a display 416, and an enter button 417. The text display 415 displays the satisfaction of the remittance condition and inquires approval, for example, "Your child is on a bus. Would you approve remittance of bus fare?", and the display 416 displays a remittance amount. The remittance amount may be an amount of money set in advance by a parent, may be input and set by the parent upon approval, or may be an amount of money which is a bus fare automatically calculated by the service server 2 on the basis of the context (a point where the child has gotten on the bus and a user's action of getting off the bus which stopped) recognized by the wearable device 1.

Next, when the remittance is approved by the parent A or parent B (steps S187a and S187b), the service server 2 gives a remittance instruction to a bank server 3 (step S190).

Next, in response to the remittance instruction from the service server 2, the bank server 3 withdraws a predetermined amount of money from a joint account of the parents (step S193) and remits the money (electronic money recharging process) to a wearable device 1 (1X or 1Y) as a target via a network (step S196).

Then, the wearable device 1 (1X or 1Y) updates the balance of electronic money held in the device in response to the remittance from the bank server 3 (step S199), makes payment via near field wireless communication with the reader 5, such as a POS terminal, and updates the balance again (step S202).

Next, the wearable device 1 transmits the content of payment to the service server 2 (step S205), and the service server 2 transmits the received content of payment to the communication terminal 4a and communication terminal 4b (steps S208a and 208b).

Then, the communication terminal 4a and the communication terminal 4b display the received content of payment (step S211).

As described above, in the present example, it is possible to set the remittance condition for each of a plurality of beneficiaries, and in a case where any of a plurality of approvers grants approval, remittance can be made.

Furthermore, "action" can be set as the context.

### (3-1-3. Third Example)

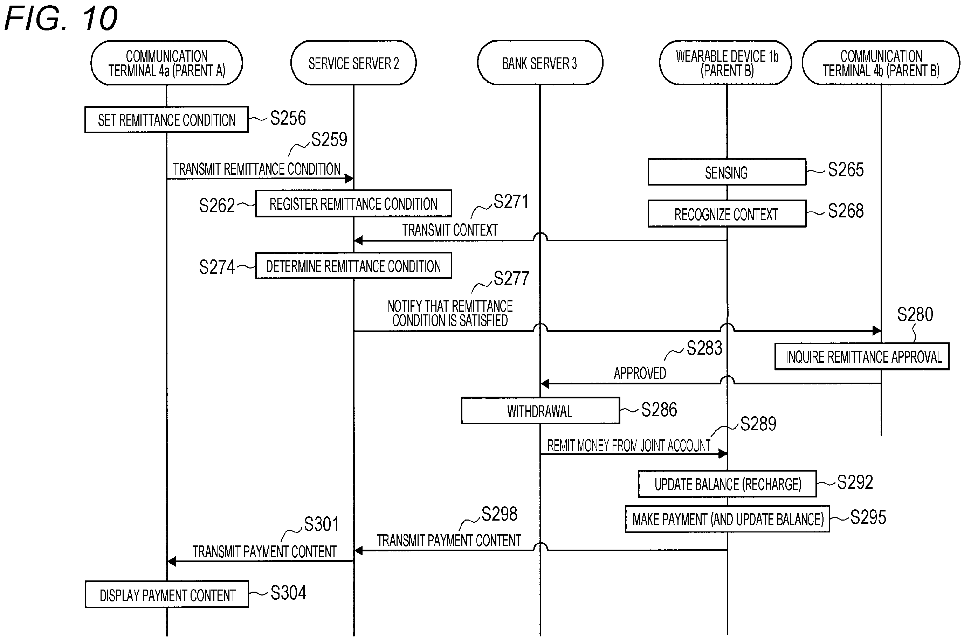

In the examples described above, the remittance from a parent to a child has been mainly described, but the present embodiment is not limited to this description, and it is also possible to manage remittance from a joint account between a couple. This will be described below with reference to Fig. 10.

Fig. 10 is a sequence diagram illustrating a remittance process according to a user context, according to a third example of the first embodiment. In the present example, it is described that, as an example, a remittance condition are set by a communication terminal 4a of a parent A and, in a case where the action or condition of a parent B satisfies the remittance condition, a predetermined amount of money is remitted from a joint account to a wearable device 1 worn by the parent B.

As illustrated in Fig. 10, firstly, in the communication terminal 4a, the remittance condition (context, remittance amount, and presence/absence of case-by-case approval) for the parent B is set by the parent A (step S256), and the remittance condition is transmitted to a service server 2 (Step S259). The context to be set may indicate both of "place" and "action", for example, a mother requests a father to go shopping at a store A (e.g., "drug store") after work, or walking near the store A. Furthermore, in the present example, the parent B as a beneficiary is also a person who has approval authority in a group, and when "the presence/absence of case-by-case approval" is set, the parent B may be set as an approver on a case-by-case basis.

Next, a remittance condition management unit 202 of the service server 2 registers the received remittance condition in a remittance condition DB 22b (step S262).

Next, a wearable device 1b worn by the parent B include various sensors 13 to sense the action and the state of the parent B who is the user (step S265), and the context is recognized on the basis of the sensing data (step S268).

Next, the wearable device 1b transmits the recognized context to the service server 2 (step S271), and a remittance condition determination unit 203 of the service server 2 determines whether the context of the parent B matches the context registered as the remittance condition or not (step S274).

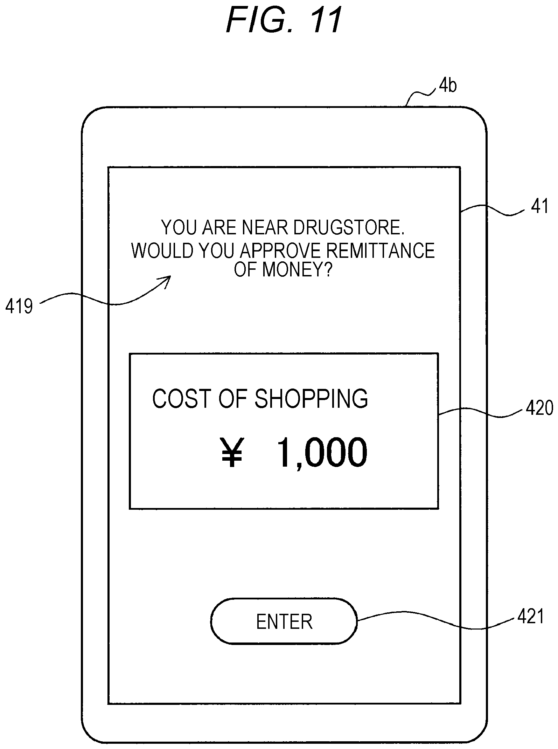

Next, in a case where the context of the parent B satisfies the remittance condition and "the presence of case-by-case approval: parent B" is set, the service server 2 notifies the communication terminal 4b of the parent B, of satisfaction of the remittance condition (step S277) and makes an inquiry about remittance approval (step S280). Here, an example of a screen requiring case-by-case approval is illustrated in Fig. 11. As illustrated in Fig. 11, the communication terminal 4b includes a display unit 41 which displays a text display 419, a display 420, and an enter button 421. The text display 419 displays the satisfaction of the remittance condition and inquires approval, for example, "You are near a drugstore. Would you approve remittance of money?", and the display 420 displays a remittance amount. Thus, this configuration reminds the parent B about the shopping.

Next, when the remittance is approved by the parent B, a remittance instruction including the remittance approval and the remittance amount is transmitted from the communication terminal 4b to a bank server 3 (step S283). Here, as an example, the remittance instruction is transmitted from the communication terminal 4b to the bank server 3, but the present example is not limited to this description, and, as in the second example, the service server 2 may be notified of the approval so that the remittance instruction is transmitted from the service server 2 to the bank server 3.

Next, in response to the remittance instruction, the bank server 3 withdraws a predetermined amount of money from the joint account of the parent A and parent B (step S286) and remits the money (electronic money recharging process) to the wearable device 1b as a target via a network (Step S289).

Then, the wearable device 1b updates the balance of electronic money held in the device in response to the remittance from the bank server 3 (step S292), makes payment via near field wireless communication with the reader 5, such as a POS terminal, and updates the balance again (step S295).

Next, the wearable device 1 transmits the content of payment to the service server 2 (step S298), and the service server 2 transmits the received content of payment to the communication terminal 4a (step S301) .

Then, the communication terminal 4a displays the received content of payment (step S304). This configuration allows the parent A to understand that the parent B has taken an action satisfying the remittance condition, the remittance has been performed, and the requested shopping has been performed.

### (3-1-4. Supplementary note)

As mentioned above, in the first embodiment, the remittance management in a community, such as a family, has been described, but several supplementary notes to the present embodiment will be given below.

### (Other examples of context)

Examples of the context which is to be set as the remittance condition include the following.
- Action: walk 10,000 steps (drink fee), get on the bus (bus fee)
- Place: enter a store within a radius of 100m from a certain point (latitude, longitude) (shopping fee), exceed a radius of 2 km from a certain point (latitude, longitude) (taxi fee)
- Place + Action: the amount of activity exceeds a threshold Q at a point P (latitude, longitude) (drink fee)
- Environment (situation): temperature rises above a specified value (drink fee), it is begin to rain (umbrella fee)
- Biology: heart rate exceeds a predetermined value (drink fee), blood sugar level falls below a predetermined value (sugar intake fee)

### (Setting of settlement condition)

In the embodiments described above, it has been described that remittance of a predetermined amount of money is made to the wearable device 1 of a child in a case where the action or the state of a child satisfies a remittance condition. However, the present embodiment is not limited to this description, and payment (use of electronic money) can be controlled to be effective in a case where a settlement condition is satisfied by the action or state of a child. For example, a wearable device 1 of a child is recharged with a predetermined amount of money in advance according to the operation of a communication terminal 4 of a parent, but the wearable device 1 may be configured to permit use (i.e., payment) of electronic money, in a case where the child satisfies a predetermined context (e.g., in a case where the child is going to make payment in a predetermined store, in a case where the child has gotten on a bus, in a case where the child has run 2 km, or the like).

### (Operation performed in case of condition is not satisfied)

In addition, in a case where a child tries to make payment by using a wearable device 1 under the condition that a remittance condition or a settlement condition is not satisfied (e.g., in a case where tapping on the reader 5, etc.), a service server 2 may automatically notify a communication terminal 4 of a parent, of this situation (e.g., "payment of some amount of money is being made at a store", etc.). In this case, when the parent confirms and approves this condition, a service server 2 can permit remittance or payment.

In addition, in a case where a child tries to make payment by using a wearable device 1 under the condition that the remittance condition or the settlement condition is not satisfied, voice, video, or text chat may be automatically activated between a device of a parent (a communication terminal 4 or a wearable device 1 worn by the parent) and the wearable device 1. This configuration allows the child to directly offer permission of remittance or payment. In addition, the parent can easily grasp a current situation of the child as well.

### (Operation performed in case of condition is satisfied)

Furthermore, a wearable device 1 may display an indicator, for example, "○○ yen has been remitted" or "payment is possible" on a display unit 15, only in a case where the remittance condition or settlement condition is satisfied. In addition, a wearable device 1 may be configured to emit clinking sound of coins when the device is shaken, only in a case where the remittance condition or settlement condition is satisfied. This configuration allows the child to intuitively understand when the child is allowed to do the shopping with the wearable device 1.

### <3-2. Second Embodiment>

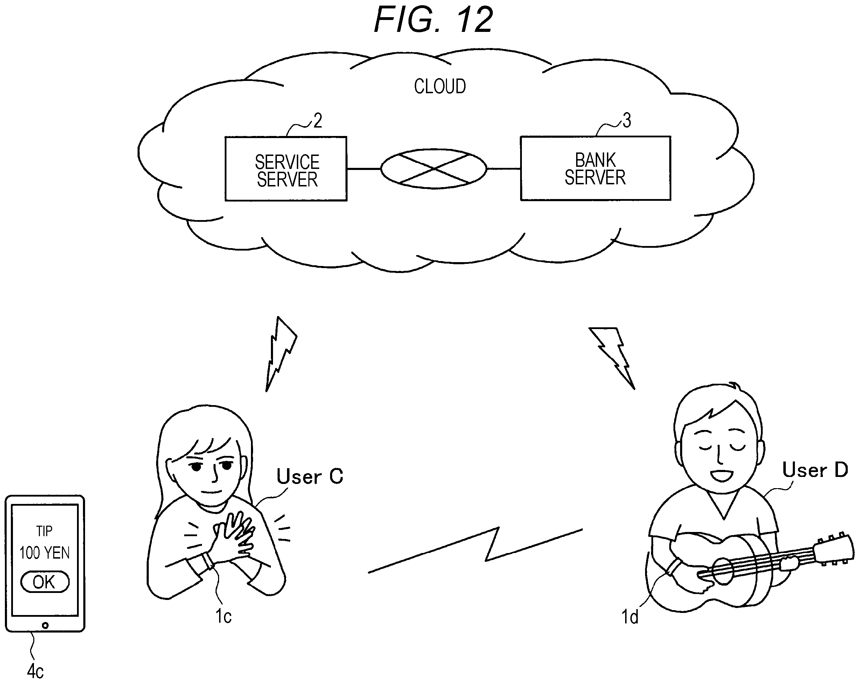

Next, a second embodiment will be described with reference to Figs. 12 to 15. In the first embodiment described above, the remittance management in a community has been described, but the present disclosure is not limited to this description and facilitates remittance to a new person or facility not associated with a user. In the present embodiment, it is possible to specify a gesture (an example of a context), a place (e.g., near an applicant for remittance, a predetermined facility, etc.) (an example of the context), and a remittance amount to register a remittance condition. An outline of the present embodiment described above will be described with reference to Fig. 12. Fig. 12 is a diagram illustrating an overview of a second embodiment.

As illustrated in Fig. 12, in the present embodiment, a user D previously registers, in a service server 2, a remittance condition, for example, an application for remittance of a predetermined amount of money (remittance amount) is made to a person applauding (gesture) near the user D (place). At this time, for example, when a user C applauds near the user D while the user D gives a performance on a road, a service server 2 makes an inquiry to the user C about remittance approval (e.g., notifies a communication terminal 4c of the user C). Give notice of remittance approval). Then, in a case of obtaining the approval of the user C, the service server 2 instructs a bank server 3 to remit the predetermined amount of money from an account of the user C to a wearable device 1d of the user D.

Thus, it is possible to provide a system for remitting electronic money as a tip from a person (spectator) applauding near the user D who is a performer to the wearable device 1d of the user D as a performer.

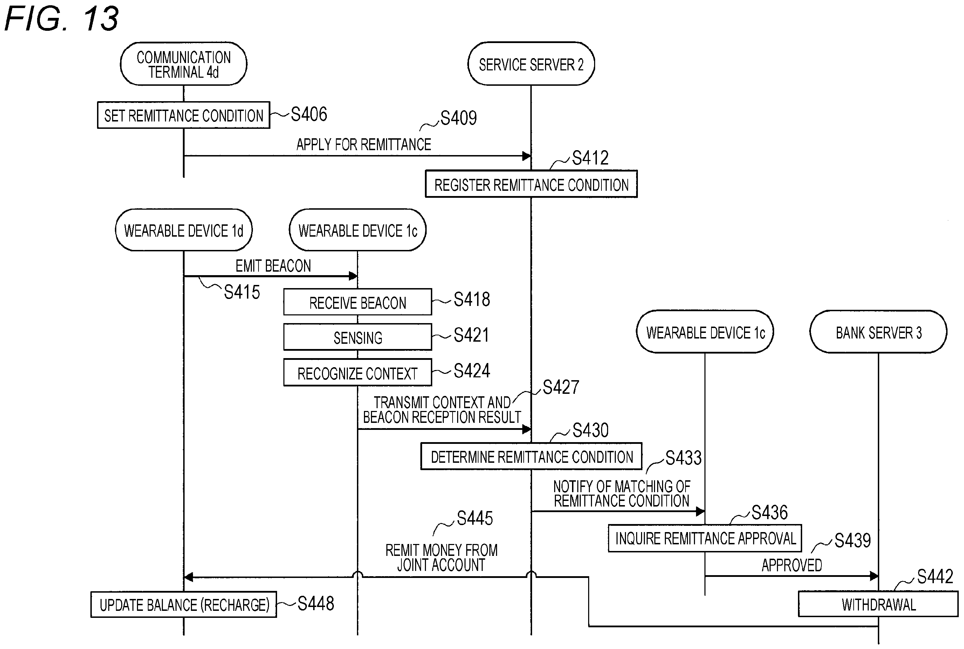

Next, an operation process according to the present embodiment will be described with reference to Fig. 13.

### (Operation process)

Fig. 13 is a sequence diagram illustrating operation process according to the second embodiment. As illustrated in Fig. 13, firstly, in a communication terminal 4d, the user D sets a remittance condition (gesture, place, and remittance amount) (step S406), and the remittance condition is transmitted to the service server 2 (step S409) and registered in the service server 2 (step S412). In the remittance condition, for example, "applause" is set as the "gesture", and, for example, "near the user D" is set as the "place".

Next, the wearable device 1d mounted to the user D emits a beacon to the surroundings while the user D gives a performance (step S415) .

Next, a wearable device 1c worn by the user C who is watching the performance near the user D receives the beacon emitted from the wearable device 1d of the user D (step S418).

Next, the wearable device 1c includes various sensors 13 to sense the action (including a gesture) and the state of the user C (step S421), and the context (such as applauding) is recognized on the basis of the sensing data (step S424).

Next, the wearable device 1c transmits the recognized context and a beacon reception result to the service server 2 (step S427).

Next, a remittance condition determination unit 203 of the service server 2 determines whether the context of the user C matches the context registered as the remittance condition or not (step S430). For example, since the remittance condition determination unit 203 understands that the user C is near the user D on the basis of the beacon reception result and further knows that the user C is applauding on the basis of the context, the situation of the user C is determined to match the remittance condition registered by the user D.

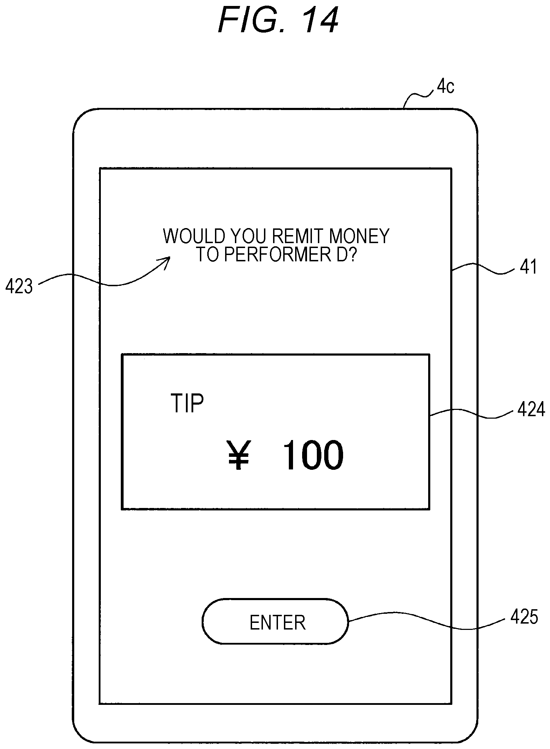

Next, in a case where the context of the user C satisfies the remittance condition, the service server 2 notifies the communication terminal 4c of the parent C, of satisfaction of the remittance condition (step S433) and makes an inquiry about remittance approval (step S436). Here, an example of a screen requiring remittance approval is illustrated in Fig. 14. As illustrated in Fig. 14, the communication terminal 4c includes a display unit 41 which displays a text display 423, a display 424, and an enter button 425, the text display 423 makes an inquiry about remittance approval, for example, "would you remit money to a performer D?", and the display 424 displays a remittance amount. Thereby, the user C can remit electronic money as a tip to the user D. Furthermore, If the user C does not want to remit money, the user C can close and exit the screen without pressing the enter button 425.

Next, when the remittance is approved by the user C, a remittance instruction including the remittance approval and the remittance amount is transmitted from the communication terminal 4c to the bank server 3 (step S439). Here, as an example, the remittance instruction is transmitted from the communication terminal 4c to the bank server 3, but the present example is not limited to this description, and the service server 2 may be notified of the approval so that the remittance instruction is transmitted from the service server 2 to the bank server 3.

Next, in response to the remittance instruction, the bank server 3 withdraws a predetermined amount of money from the account of the user C (step S442) and remits the money (electronic money recharging process) to the wearable device 1d of the user D as a beneficiary via a network (step S445).

Then, the wearable device 1d updates the balance of electronic money held in the device in response to the remittance from the bank server 3 (step S448). The wearable device 1d may emit clinking sound of coins or vibrate when the money is remitted. Thereby, the user D can intuitively understand the remittance of money from a nearby person.

In the example described above, the remittance of electronic money from the user C who is the spectator to the user D who is the performer has been described, but the application of the present embodiment is not limited to this description. For example, when a user who is in a spectator seat in a baseball stadium takes action of calling a nearby beer seller, a predetermined amount of electronic money may be remitted as a beer fee to a wearable device 1 of the seller. Thus, the beer seller is only required to pass the beer, and the interchange of money is eliminated, leading to smoother work.

### (Another operation process)

In the embodiment described above, the management of remittance to a new person has been described, but the present embodiment is not limited to this description, and it is also possible to manage remittance to a facility. For example, a user C can visit a shrine (facility) and remit electronic money to a shrine as a small offering (specifically, remittance to a wearable device 1e of a Shinto priest (user E) who is a manager of the shrine).

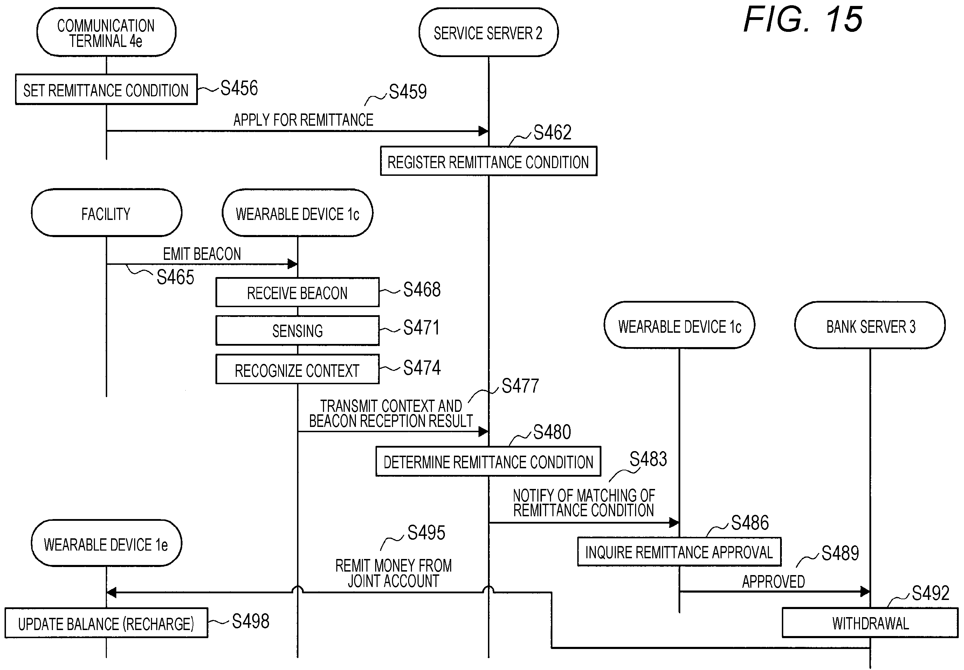

Such remittance management will be described with reference to Fig. 15. Fig. 15 is a sequence diagram illustrating another operation process according to the present embodiment.

As illustrated in Fig. 15, firstly, in a communication terminal 4e, the user E sets a remittance condition (gesture, place, and remittance amount) (step S456), and the remittance condition is transmitted to the service server 2 (step S459) and registered in the service server 2 (step S462). In the remittance condition, for example, "action of bowing or clapping hands (during prayer)" is set as the "gesture", and, for example, "around a predetermined facility (e.g., within a radius of 50 m)" is set as the "place".

Next, in the predetermined facility, a beacon transmitter installed in the facility emits a beacon to the periphery (e.g., within a radius of 50 m) (step S465).

Next, a wearable device 1c worn by the user C who visits the facility receives the beacon emitted from the facility (step S468).

Next, the wearable device 1c includes various sensors 13 to sense the action (including a gesture) and the state of the user C (step S471), and the context (action during prayer (such as bowing or clapping)) is recognized on the basis of the sensing data (step S474).

Next, the wearable device 1c transmits the recognized context and a beacon reception result to the service server 2 (step S477).

Next, a remittance condition determination unit 203 of the service server 2 determines whether the context of the user C matches the context registered as the remittance condition or not (step S480). For example, since the remittance condition determination unit 203 understands that the user C is near a predetermined facility on the basis of the beacon reception result and further knows that the user C is taking action of prayer on the basis of the context, the situation of the user C is determined to match the remittance condition registered by the user E.

Next, in a case where the context of the user C satisfies the remittance condition, the service server 2 notifies the communication terminal 4c of the parent C, of satisfaction of the remittance condition (step S483) and makes an inquiry about remittance approval (step S486).

Next, when the remittance is approved by the user C, a remittance instruction including the remittance approval and the remittance amount is transmitted from the communication terminal 4c to a bank server 3 (step S489). Here, as an example, the remittance instruction is transmitted from the communication terminal 4c to the bank server 3, but the present example is not limited to this description, and the service server 2 may be notified of the approval so that the remittance instruction is transmitted from the service server 2 to the bank server 3.

Next, in response to the remittance instruction, the bank server 3 withdraws a predetermined amount of money from an account of the user C (step S492) and remits the money (electronic money recharging process) to the wearable device 1e of the user E as a beneficiary via a network (step S495).

Then, the wearable device 1e updates the balance of electronic money held in the device in response to the remittance from the bank server 3 (step S498). The wearable device 1e may emit clinking sound of coins or vibrate when the money is remitted. Thus, the user E can intuitively understand that a person has visited the facility or that money is remitted.

### <3-3. Others>

### (3-3-1. Recognition of high-level context)

In the context of a user recognized in the first embodiment and the second embodiment described above, the action or state of a user for a relatively short time, such as a current position or an action (running, walking, standing, getting on a train, or the like) recognized by the motion sensor is mainly recognized, but the present disclosure is not limited to this description, and a high-level context recognition unit 204 recognizes a more specific content of action (so-called high-level context), for example, "on the way to home from a cram school" or "helping with washing dishes in kitchen".

As described above, for example, mere "walk", "run", "bicycle", or "train/bus" on a habitual route is recognized as the context, while "on the way to and from school", "on the way to and from a cram school", or "on the way to and from culture lesson" is recognized as the high-level context. In addition, referring to the user's schedule and calendar information, "depart for overseas travel for a week or more", "returned home from a one-week business trip", "departed to an athletic meet", "arrived at a club camp", or the like is recognized as the high-level context. Furthermore, in a case where a room ID can be detected via Wi-Fi or a beacon and indoor location can be detected, for example, "I am in a living room", "I am in a powder room", "I am in a bathroom", "I am in my room", or "I am in a bedroom" is recognized as the high-level context.

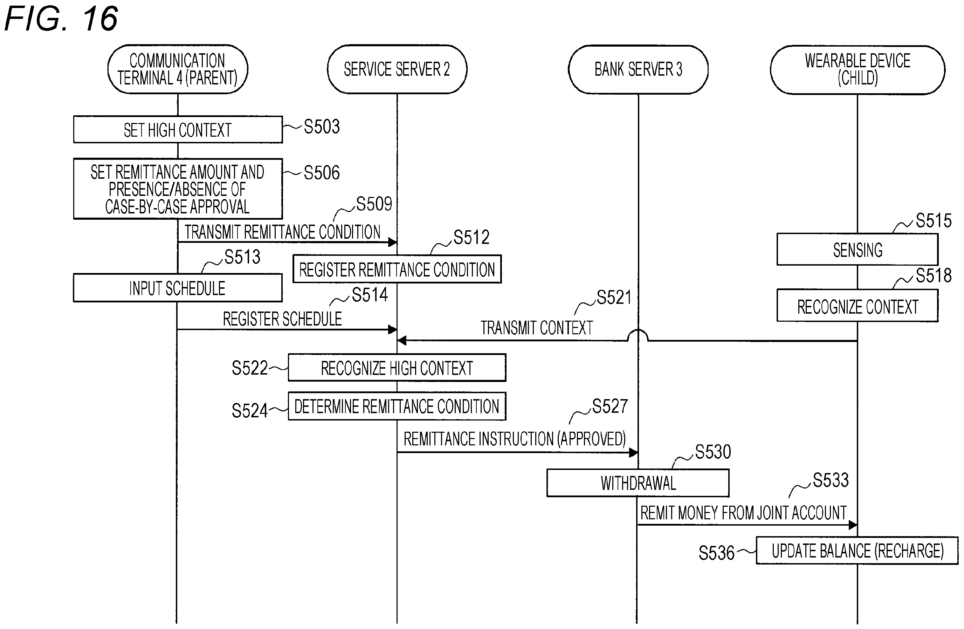

Remittance management in a case where such a high-level context is set as a remittance condition will be described below in detail with reference to Fig. 16. Fig. 16 is a sequence diagram illustrating an operation process of remittance management in a case where a high-level context is used as a remittance condition.

Specifically, as illustrated in Fig. 16, firstly, in a communication terminal 4, a high-level context (also referred to as a high context) as a remittance condition is set by a parent who is the user thereof (step S503). For example, the remittance condition may include "help with" cleaning windows" or" on the way to and from a cram school".

Next, in the communication terminal 4, a remittance amount and the presence/absence of case-by-case approval are set by the parent who is the user thereof (step S506).

Then, the communication terminal 4 transmits the remittance condition including the set high-level context, remittance amount, and the presence/absence of case-by-case approval to a service server 2 (step S509), and the remittance condition is registered in the service server 2 (step S512).

Next, in the communication terminal 4, the parent inputs a schedule of a child (step S513). Specifically, the schedule represents the date and time of a child's cram school, and such a schedule is used to recognize the high-level context" on the way to and from a cram school". However, since recognition of "on the way to and from a cram school" or the like is not necessarily determined on the basis of the schedule and may be determined on the basis of a usual action history of the child, and such schedule registration is not essential.

Next, the input schedule is transmitted from the communication terminal 4 to the service server 2 and registered (step S514).

Next, a wearable device 1 mounted to the child senses the action and the state of the child who is the user by using various sensors 13 (step S515) and recognizes the context of the user on the basis of the sensing data (step S518).

Next, the wearable device 1 transmits the recognized context to the service server 2 (step S521). At this time, the wearable device 1 may also transmit the sensing data. In addition, in a case where the wearable device 1 detects an indoor location, the wearable device 1 may also transmit an acquired room ID as the sensing data.

Next, a high-level context recognition unit 204 of the service server 2 performs high-level context recognition, on the basis of the received context, sensing data, schedule information registered in advance, and the like, by using a determination level stored in a determination model DB 22c (step S522). For example, in a case where a help mode is turned on by the parent, a "help determination model" is extracted from the determination model DB 22c, and it is determined whether the action of the child corresponds to a predetermined help or not (high-level context is recognized).

Then, a remittance condition determination unit 203 of the service server 2 determines whether the recognized high-level context matches the high-level context registered as the remittance condition or not (step S524).

Next, in a case where the high-level context of the child satisfies the remittance condition and the absence of case-by-case approval is set, the service server 2 instructs a bank server 3 to remit a set predetermined amount of money to the wearable device 1 of the child (step S527).

Next, in response to the remittance instruction from the service server 2, the bank server 3 withdraws a predetermined amount of money from a joint account of the parent (step S530) and remits the money (electronic money recharging process) to the wearable device 1 via a network (step S533).

Then, the wearable device 1 updates the balance of electronic money held in the device in response to the remittance from the bank server 3 (step S536).

As described above, in the present example, in a case where the high-level context is set as the remittance condition and the action and state of the child match the remittance condition, it is possible to remotely recharge (remit money) the wearable device 1 of the child.

### (3-3-2. Remittance between accounts)

In each of the embodiments described above, although direct remittance of electronic money from an account to a wearable device 1 is assumed, the present disclosure is not limited to this.

For example, money may be remitted from a joint account of a parent to an account of a child so that the wearable device 1 of the child is recharged with a predetermined amount of money from the corresponding child's account of the child.

### <<4. Conclusion>>

As described above, in the information processing system according to an embodiment of the present disclosure, it is possible to control remittance of an amount of money set according to a user context.

As described above, preferable embodiments of the present disclosure has been described in detail with reference to the accompanying drawings, but the technical scope of the present technology is not limited to these examples. A person skilled in the art may obviously find various alternations and modifications within the technical ideas as set forth in the scope of the appended claims, and it should be understood that they will naturally come under the technical scope of the present invention.

For example, a computer program can be provided which causes hardware, such as the CPU, ROM, and RAM built in the above-described wearable device 1, service server 2, or communication terminal 4 to achieve the functions of the wearable device 1, service server 2, or communication terminal 4. A computer readable storage medium storing the computer program is also provided.

In addition, the effects described herein are by way of example only, and are not limitative. In other words, with or in place of the above effects, the technology according to the present disclosure may achieve other effects that are clear to those skilled in the art from the description of this specification.

It is noted that the present technology also may include the following configurations.
(1) An information processing device including:
   a determination unit configured to determine whether a user context matches a remittance condition previously registered or not, on the basis of context information regarding a user wearing a device having a payment function; and
   a control unit configured to perform, when the user context is determined to match the remittance condition, control for remittance of a predetermined amount of money to a predetermined destination.
(2) The information processing device according to (1), in which the control unit instructs a bank server managing a predetermined account to remit the predetermined amount of money from the predetermined account to a predetermined wearable device.
(3) The information processing device according to (2), in which the predetermined wearable device is a device worn by the user.
(4) The information processing device according to (2), in which the predetermined wearable device is a device worn by a setter who has set the remittance condition.
(5) The information processing device according to any of (1) to (4), in which the context information is a context indicating at least one of location, action, situation, environment, voice, speech, biological information, or gesture.
(6) The information processing device according to (5), in which the context information includes a high-level context recognized as an action content more specific than the context.
(7) The information processing device according to any of (1) to (6), in which
   the control unit,
   when the user context is determined to match the remittance condition, performs control for remittance of money to the destination, in a case where an approval of a remittance condition setter has already been obtained, and otherwise inquires an approval of the remittance condition setter and performs control for remittance of money to the predetermined destination after the approval is obtained in a case where an approval of a remittance condition setter has not been obtained.
(8) The information processing device according to any of (1) to (7), in which
   the control unit,
   when receiving a content of payment from the device worn by the user after controlling the device to remit the predetermined amount of money, performs control to transmit the content of payment to the remittance condition setter.
(9) An information processing method, by a processor, including:
   determining whether a user context matches a remittance condition previously registered or not, on the basis of context information regarding a user wearing a device having a payment function; and
   performing, when the user context is determined to match the remittance condition, control for remittance of a predetermined amount of money to a predetermined destination.
(10) A program for causing a computer to function as:
   a determination unit configured to determine whether a user context matches a remittance condition previously registered or not, on the basis of context information regarding a user wearing a device having a payment function; and
   a control unit configured to perform, when the user context is determined to match the remittance condition, control for remittance of a predetermined amount of money to a predetermined destination.

### REFERENCE SIGNS LIST

- 1: Wearable device
- 10: Control unit
- 101: Context recognition unit
- 102: Settlement unit
- 103: Authentication unit
- 11: Communication unit
- 12: Near field wireless communication unit
- 13: Various sensors
- 13a: Motion sensor
- 13b: Position sensor
- 13c: Environment sensor
- 13d: Biological sensor
- 14: Voice input unit
- 15: Display unit
- 16: Voice output unit
- 17a: User information DB
- 17b: Device information DB
- 17c: Money amount data DB
- 2: Service server
- 20: Control unit
- 201: Group management unit
- 202: Remittance condition management unit
- 203: Remittance condition determination unit
- 204: High-level context recognition unit
- 21: Communication unit
- 22a: User information DB
- 22b: Remittance condition DB
- 22c: Determination model DB
- 3: Bank server
- 30: Control unit
- 301: User authentication unit
- 302: Account deposit/withdrawal management unit
- 31: Communication unit
- 4: Communication terminal
- 5: Reader

## Claims

1. An information processing device comprising:
a determination unit configured to determine whether a user context matches a remittance condition previously registered or not, on a basis of context information regarding a user wearing a device having a payment function; and
a control unit configured to performing, when the user context is determined to match the remittance condition, control for remittance of a predetermined amount of money to a predetermined destination.

2. The information processing device according to claim 1, wherein the control unit instructs a bank server managing a predetermined account to remit the predetermined amount of money from the predetermined account to a predetermined wearable device.

3. The information processing device according to claim 2, wherein the predetermined wearable device is a device worn by the user.

4. The information processing device according to claim 2, wherein the predetermined wearable device is a device worn by a setter who has set the remittance condition.

5. The information processing device according to claim 1, wherein the context information is a context indicating at least one of location, action, situation, environment, voice, speech, biological information, or gesture.

6. The information processing device according to claim 5, wherein the context information includes a high-level context recognized as an action content more specific than the context.

7. The information processing device according to claim 1, wherein
the control unit,
when the user context is determined to match the remittance condition, performs control for remittance of money to the destination, in a case where an approval of a remittance condition setter has already been obtained, and inquires an approval of the remittance condition setter and performs control for remittance of money to the predetermined destination after the approval is obtained in a case where an approval of a remittance condition setter has not been obtained.

8. The information processing device according to claim 1, wherein
the control unit,
when receiving a content of payment from the device worn by the user after controlling the device to remit the predetermined amount of money, performs control to transmit the content of payment to the remittance condition setter.

9. An information processing method, by a processor, comprising:
determining whether a user context matches a remittance condition previously registered or not, on a basis of context information regarding a user wearing a device having a payment function; and
performing, when the user context is determined to match the remittance condition, control for remittance of a predetermined amount of money to a predetermined destination.

10. A program for causing a computer to function as:
a determination unit configured to determine whether a user context matches a remittance condition previously registered or not, on a basis of context information regarding a user wearing a device having a payment function; and
a control unit configured to perform, when the user context is determined to match the remittance condition, control for remittance of a predetermined amount of money to a predetermined destination.
